# EUROPEAN PATENT APPLICATION

(11) **EP 2 750 048 A1**
(43) Date of publication of application: **02.07.2014**
(21) Application number: 12779560.7
(22) Date of filing: 09.04.2012
(51) Int. Cl.: G06F 17/30

(54) **WEBPAGE COLOUR SETTING METHOD, WEB BROWSER AND WEBPAGE SERVER**

(30) Priority: 30.09.2011 CN 201110301596
(71) Applicant: Huawei Technologies Co., Ltd., Shenzhen, Guangdong 518129 (CN)
(72) Inventor: WANG, Le, Shenzhen Guangdong 518129 (CN); HE, Jin, Shenzhen Guangdong 518129 (CN); LI, Dongyuan, Shenzhen Guangdong 518129 (CN)
(74) Representative: Körber, Martin Hans
(86) International application number: PCT/CN2012/073647
(87) International publication number: WO 2012/149855

(57) **Abstract**

Embodiments of the present invention provide a web page color setting method, a web browser, and a web server. The web page color setting method is used to set a color of a web page, where the web page includes a web page background and a content background, and a color of the web page background is different from a color of the content background. The method includes: receiving a transparency parameter input by a user; and setting transparency of the content background according to the transparency parameter, to set the color of the web page by setting a color generated after the content background is superimposed with the web page background. The embodiments of the present invention further provide a web browser and a web server. With the technical solutions provided in the embodiments of the present invention, setting the web page color will not influence the color of other contents displayed by the monitor. Moreover, the process of setting the web page color is quite simple, and easy to implement. Therefore, the technical solutions can solve the problem in the prior art that it is rather inconvenient to adjust the web page color by adjusting the display color of the monitor.

## Description

This application claims priority to Chinese Patent Application No. 201110301596.5, filed with the Chinese Patent Office on September 30, 2011 and entitled "WEB PAGE COLOR SETTING METHOD, WEB BROWSER AND WEB SERVER", which is hereby incorporated by reference in its entirety.

### TECHNICAL FIELD

The present invention relates to web browsing technologies, and in particular, to a web page color setting method, a web browser, and a web server.

### BACKGROUND

The Internet technology has significantly changed the way of acquiring daily information. Over the Internet, people browse web pages to learn news, current affairs and scientific knowledge and participate in topics of interest.

The growing wealth of online information spurs people to spend more and more time in browsing web pages. Browsing web pages for a long time inevitably leads to visual fatigue of users. Some users adjust the display color of web pages by adjusting the display color of the monitor, to mitigate visual fatigue. For example, users can adjust parameters such as the display brightness, contrast and color temperature of the monitor to adjust the display color of the monitor, thereby adjusting the display color of web pages. However, the adjustment of the display color of the monitor will influence the color of all the contents displayed by the monitor rather than influence the display color of only web pages. As a result, when performing other applications such as playing movies after browsing web pages, the users need to re-adjust the display color of the monitor to meet display requirements of other applications.

It can be seen that, it is rather inconvenient to adjust the web page color by adjusting the display color of the monitor.

### SUMMARY

In view of this, it is necessary to provide a web page color setting method to solve the technical problem in the prior art that it is rather inconvenient to adjust the web page color by adjusting the display color of the monitor.

In addition, a web browser is provided to solve the technical problem in the prior art that it is rather inconvenient to adjust the web page color by adjusting the display color of the monitor.

Furthermore, a web server is provided to solve the technical problem in the prior art that it is rather inconvenient to adjust the web page color by adjusting the display color of the monitor.

In one aspect, an embodiment of the present invention provides a web page color setting method for setting a color of a web page, where the web page includes a web page background and a content background, and a color of the web page background is different from a color of the content background, and the method includes:
receiving a transparency parameter input by a user; and
setting transparency of the content background according to the transparency parameter, to set the color of the web page by setting a color generated after the content background is superimposed with the web page background.

In another aspect, an embodiment of the present invention provides a web page color setting method, including:
receiving a web page access request from a web browser; and
returning a web page requested to be accessed that includes a web page background and a content background to the web browser, so that the web browser sets transparency of the content background according to a transparency parameter input by a user, to set a color of the web page by setting a color generated after the content background is superimposed with the web page background, where a color of the web page background is different from a color of the content background.

In another aspect, an embodiment of the present invention provides a web browser for setting a color of a web page, where the web page includes a web page background and a content background, and a color of the web page background is different from a color of the content background, and the web browser includes:
an input module, configured to receive a transparency parameter input by a user; and
a setting module, configured to set transparency of the content background according to the transparency parameter, to set the color of the web page by setting a color generated after the content background is superimposed with the web page background.

In another aspect, an embodiment of the present invention provides a web server, including:
a receiving module, configured to receive a web page access request from a web browser; and
a sending module, configured to return a web page requested to be accessed that includes a web page background and a content background to the web browser, so that the web browser sets transparency of the content background according to a transparency parameter input by a user, to set a color of the web page by setting a color generated after the content background is superimposed with the web page background, where a color of the web page background is different from a color of the content background.

When setting a color of a web page on which a color of a web page background is different from a color of a content background, in the technical solutions provided in the embodiments of the present invention, transparency of the content background is set according to a transparency parameter input by a user, to set the color of the web page by setting a color generated after the content background is superimposed with the web page background. In this way, setting the web page color will not influence the color of other contents displayed by the monitor. Moreover, the process of setting the web page color is quite simple, and easy to implement.

### BRIEF DESCRIPTION OF DRAWINGS

To illustrate the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is an exemplary flowchart of a web page color setting method according to an embodiment of the present invention;
FIG. 2a is an exemplary schematic diagram of a web page display interface according to an embodiment of the present invention;
FIG. 2b is an exemplary schematic diagram of a web page display interface according to another embodiment of the present invention;
FIG. 3a is an exemplary schematic diagram of a brightness configuration interface according to an embodiment of the present invention;
FIG. 3b is an exemplary schematic diagram of a brightness configuration interface according to another embodiment of the present invention;
FIG. 4 is an exemplary flowchart of a web page color setting method according to an embodiment of the present invention;
FIG. 5 is an exemplary schematic logical structural diagram of a web browser according to an embodiment of the present invention; and
FIG. 6 is an exemplary schematic logical structural diagram of a web server according to an embodiment of the present invention.

### DESCRIPTION OF EMBODIMENTS

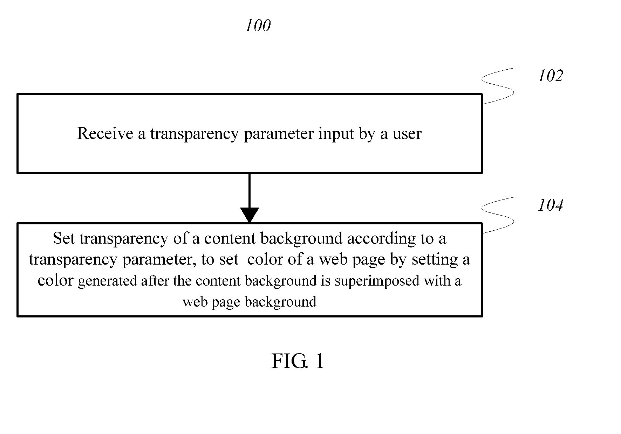

FIG. 1 is an exemplary flowchart of a web page color setting method 100 according to an embodiment of the present invention. In a specific implementation process, the web page color setting method 100 may specifically be performed by a web browser. The web page color setting method 100 provided in the embodiment of the present invention is used to set a color of a web page, where the web page includes a web page background and a content background, and a color of the web page background is different from a color of the content background.

Step 102: Receive a transparency parameter input by a user.

Step 104: Set transparency of the content background according to the transparency parameter, to set the color of the web page by setting a color generated after the content background is superimposed with the web page background.

A person skilled in the art should understand that, as regards a web page that includes a web page background and a content background, the web page background lies at a under layer, and the content background lies at an upper layer. If the content background is completely opaque, the web page background will be completely blocked by the content background, which results in that the web page background is not displayed. By setting the transparency of the content background, the underlying web page background can be displayed by penetrating the content background. In the penetration process, a color of the content background is superimposed with a color of the web page background. Therefore, if the color of the web page background is different from the color of the content background, the two colors will be superimposed. For example, if the color of the web page background is red and the color of the content background is blue, the color generated after superimposition may be purple. When the transparency of the content background changes, the color generated after superimposition will also change. In this way, by setting the transparency of the content background, the color generated after the content background is superimposed with the web page background can be adjusted.

An important effect of setting the web page color is to set the brightness of the web page. More specifically, on condition that black and white are used to set the web page background and the content background, the brightness of the web page can be set easily by adjusting the transparency of the content background. For example, on condition that the web page background is set to black and the content background is set to white, if the transparency of the content background is set to 50%, the color generated after the content background is superimposed with the web page background is gray. In this case, increasing the transparency of the content background makes the color generated after superimposition closer to black, and therefore makes the web page dimmer; and lowering the transparency of the content background makes the color generated after superimposition closer to white, and therefore makes the web page brighter. In another example, on condition that the web page background is set to white and the content background is set to black, if the transparency of the content background is set to 50%, the color generated after the content background is superimposed with the web page background is also gray. In this case, increasing the transparency of the content background makes the color generated after superimposition closer to white, and therefore makes the web page brighter; and lowering the transparency of the content background makes the color generated after superimposition blacker, and therefore makes the web page dimmer.

In a specific implementation process, the following codes may be used to set the content background of the web page to white and set the web page background to black:

```
           Css:
            html {background:#000;}
            body {background: #fff}
```

When the web page color setting method 100 is applied to control display brightness of a web page, adjustment of the transparency of the content background may increase brightness of the web page or decrease brightness of the web page, depending on the color of the web page background and the color of the content background. Therefore, to facilitate understanding and use by the user, step 102 may specifically be implemented as: receiving at least one brightness control parameter input by the user, and calculating the transparency parameter according to the at least one brightness control parameter. In this way, the user can set the brightness of the web page according to usual habits. For example, when the brightness control parameter is a brightness value input by the user, a larger value of the brightness value input by the user makes the web page brighter, and a smaller value of the brightness value input by the user makes the web page dimmer. In a specific implementation process, after the user inputs a brightness value, the brightness value will be converted into a transparency value of the content background according to a preset algorithm, to set the transparency of the content background according to the transparency value of the content background.

In a specific implementation process, the at least one brightness control parameter may include a predicted usage duration and a minimum brightness value. In this case, step 102 may further include: calculating a transparency progressive step length as the transparency parameter according to the predicted usage duration and the minimum brightness value. In step 104, the setting transparency of the content background according to the transparency parameter may specifically be implemented as: adjusting the transparency of the content background gradually according to the transparency progressive step length. In this case, the adjustment should be understood as starting with the current transparency of the content background.

In a specific implementation process, the at least one brightness control parameter may also be a specific brightness value. In this case, step 102 may further include: calculating a transparency value as the transparency parameter according to the brightness value. In step 104, the setting transparency of the content background according to the transparency parameter may specifically be implemented as: setting the transparency of the content background according to the transparency value.

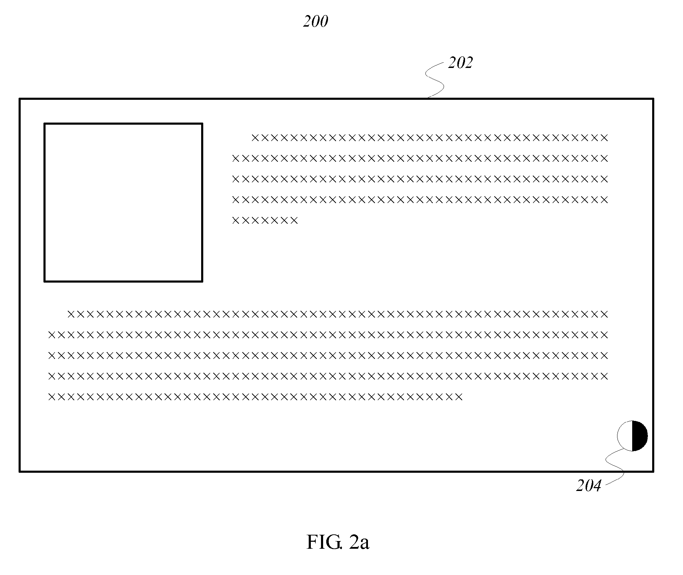

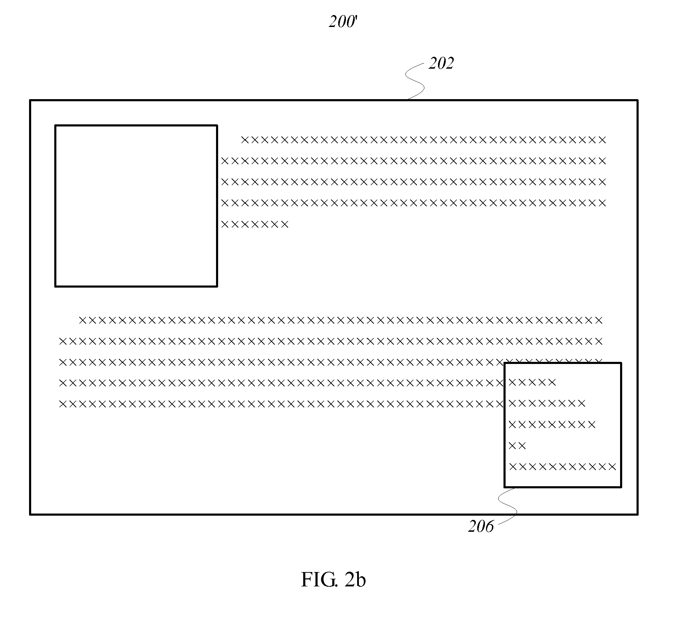

When the web page color setting method 100 is applied to control display brightness of a web page, in a specific implementation process, step 102 may specifically be implemented as: displaying a brightness configuration interface for configuring the at least one brightness control parameter, receiving the at least one brightness control parameter configured by the user through the brightness configuration interface, and storing the parameter. In a specific implementation process, the user may click a brightness configuration button to invoke the brightness configuration interface. That is, a brightness configuration button is displayed, and in response to a click of the user on the brightness configuration button, the brightness configuration interface is displayed. The brightness configuration button may be displayed in an area on the web page, for example, at a lower right corner of the web page; or may be displayed in an area on the web browser, for example, next to an address input box of the web browser. As shown in FIG. 2a, a web page display interface 200 displays a web page 202 and a brightness configuration button 204. After the user clicks the brightness configuration button 204, as shown in FIG. 2b, a web page display interface 200' displays a web page 202 and a brightness configuration button 206. In addition, instead of being invoked through the brightness configuration button, the brightness configuration interface may be always displayed in an area on the web page, for example, at a lower right corner on the web page, until the user closes the brightness configuration interface. In addition, on condition that the user does not configure a brightness control parameter among the at least one brightness control parameters, a default value of the brightness control parameter is adopted.

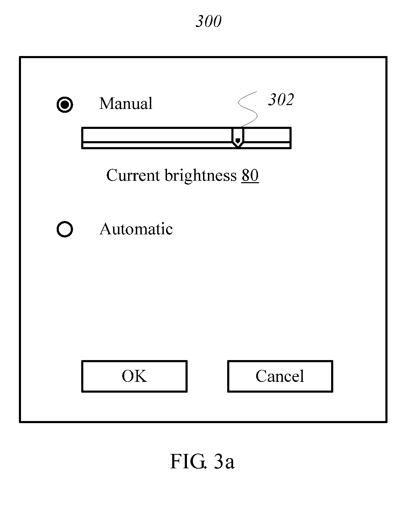

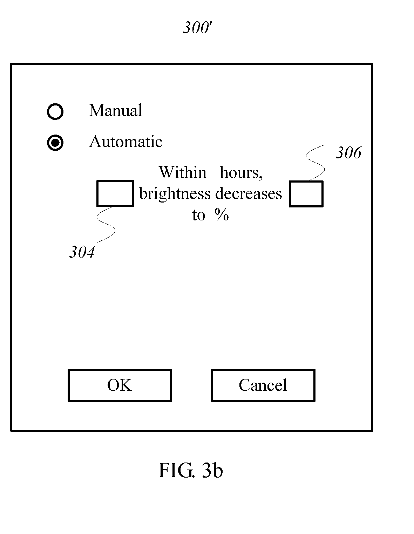

As mentioned above, in a specific implementation process, the at least one brightness control parameter may be a brightness value. In addition, the at least one brightness control parameter may also be a predicted usage duration and a minimum brightness value. The following describes the configuration interface and the setting process of the brightness value, the predicted usage duration, and the minimum brightness with reference to FIG. 3a and FIG. 3b.

In a specific implementation process, the brightness configuration interface may provide, for example, but not limited to, two manners, namely, automatic and manual manners, for the user to set the at least one brightness control parameter. Specifically, a brightness configuration interface when the user selects the manual manner is as shown by the brightness configuration interface 300 in FIG. 3a; and a brightness configuration interface when the user selects the automatic manner is as shown by the brightness configuration interface 300' in FIG. 3b.

FIG. 3a is an exemplary schematic diagram of a brightness configuration interface 300 according to an exemplary embodiment of the present invention.

A brightness configuration slider 302 is displayed on the brightness configuration interface 300. The user may set a brightness value by sliding the brightness configuration slider 302. For example, on the brightness configuration interface 300 shown in FIG. 3, the brightness value set by the user by sliding the brightness configuration slider 302 is 80. After the user sets the brightness value, the brightness value is converted into a transparency value of the content background based on a preset algorithm.

It should be noted that in a specific implementation process, the brightness value may not only be set by sliding the brightness configuration slider 302, but may also be set in other manners, for example, by providing an input box for the user to directly input a brightness value.

FIG. 3b is an exemplary schematic diagram of a brightness configuration interface 300' according to another exemplary embodiment of the present invention.

A predicted usage duration input box 304 and a minimum brightness value input box 306 are displayed on the brightness configuration interface 300'. The user may input a predicted usage duration in the predicted usage duration input box 304, for example, an approximate duration of current Internet access. The user may input an acceptable minimum brightness value in the minimum brightness value input box 306. In this way, the transparency progressive step length of the content background can be calculated according to the predicted usage duration and the minimum brightness value. Depending on specific colors of the web page background and the content background, the progressive step length may be an increment step size or a decrement step size. On condition that the progress step size is calculated, the transparency of the content background of the web page can be adjusted gradually according to the progressive step length.

It should be noted that in a specific implementation process, the user may be prompted to directly input a brightness value, or input predicted usage duration and a minimum brightness value, without distinguishing the automatic manner from the manual manner as shown in FIG. 3a and FIG. 3b.

In a specific implementation process, the transparency of the content background is lower than a preset threshold no matter how the user sets the brightness value or set the predicted usage duration and the minimum brightness value, thereby preventing the web page from being too bright or too dim as a result of setting the content background as fully transparent. In the technical solution provided in the embodiment of the present invention, the transparency of the content background may be set by using the following codes:

```
          Javascript:
            function set brightness (transparency) {
                if(transparency>threshold)return; //prevent a too dim interface from being
                invisible
                document.body.style.opacity=transparency;
            }
```

When setting a color of a web page on which a color of a web page background is different from a color of a content background, in the technical solution provided in the embodiment of the present invention, transparency of the content background is set according to a transparency parameter input by a user, to set the color of the web page by setting a color generated after the content background is superimposed with the web page background. In this way, setting the web page color will not influence the color of other contents displayed by the monitor. Moreover, the process of setting the web page color is quite simple, and easy to implement.

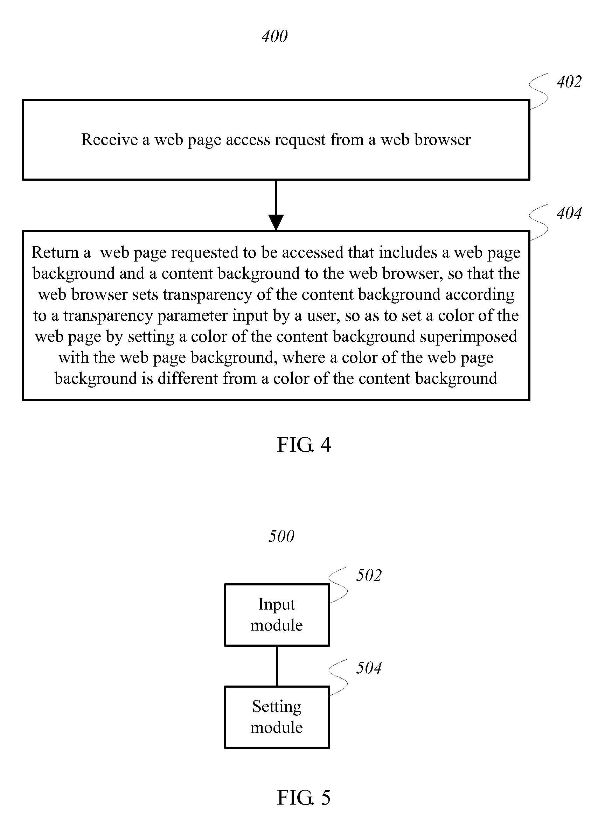

FIG. 4 is an exemplary flowchart of a web page color setting method 400 according to an embodiment of the present invention. In a specific implementation process, the web page color setting method 400 may specifically be performed by a web server.

Step 402: Receive a web page access request from a web browser.

Step 404: Return a web page requested to be accessed that includes a web page background and a content background to the web browser, so that the web browser sets transparency of the content background according to a transparency parameter input by a user, to set a color of the web page by setting a color generated after the content background is superimposed with the web page background, where a color of the web page background is different from a color of the content background.

As mentioned above, in a specific implementation process, the web page background may be set to white, and the content background may be set to black; or, the web page background is set to black, and the content background is set to white. Through the foregoing settings, the brightness of the web page can be set.

FIG. 5 is an exemplary schematic logical structural diagram of a web browser 500 according to an embodiment of the present invention. The web browser 500 provided in the embodiment of the present invention is used to set a color of a web page, where the web page includes a web page background and a content background, and a color of the web page background is different from a color of the content background. The web browser 500 includes an input module 502 and a setting module 504.

The input module 502 is configured to receive a transparency parameter input by a user.

The setting module 504 is configured to set transparency of the content background according to the transparency parameter, to set the color of the web page by setting a color generated after the content background is superimposed with the web page background.

As mentioned above, in a specific implementation process, the web page background may be set to white, and the content background may be set to black; or, the web page background is set to black, and the content background is set to white. Through the foregoing settings, the web browser 500 can set the brightness of the web page.

In setting the brightness of the web page, when receiving the transparency parameter input by the user, the input module 502 is specifically configured to receive at least one brightness control parameter input by the user, and calculate the transparency parameter according to the at least one brightness control parameter.

In a specific implementation process, the at least one brightness control parameter may include a predicted usage duration and a minimum brightness value. In this case, the input module 502 is specifically configured to calculate a transparency progressive step length as the transparency parameter according to the predicted usage duration and the minimum brightness value; and, when setting transparency of the content background according to the transparency parameter, the setting module 504 is specifically configured to adjust the transparency of the content background gradually according to the transparency progressive step length. In this case, the adjustment should be understood as starting with the current transparency of the content background.

In a specific implementation process, the at least one brightness control parameter may also be a specific brightness value. In this case, the input module 502 is specifically configured to calculate a transparency value as the transparency parameter according to the brightness value; and, when setting transparency of the content background according to the transparency parameter, the setting module 504 is specifically configured to set the transparency of the content background according to the transparency value.

In a specific implementation process, the input module 502 is specifically configured to: display a brightness configuration interface for configuring the at least one brightness control parameter, receive the at least one brightness control parameter configured by the user through the brightness configuration interface, and store the parameter.

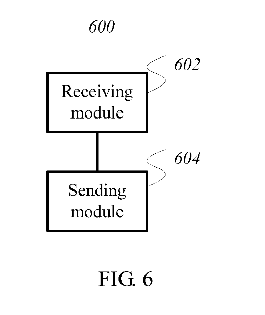

FIG. 6 is an exemplary schematic logical structural diagram of a web browser 600 according to an embodiment of the present invention. The web browser 600 provided in the embodiment of the present invention specifically includes a receiving module 602 and a sending module 604.

The receiving module 602 is configured to receive a web page access request from a web browser.

The sending module 604 is configured to return a web page requested to be accessed that includes a web page background and a content background to the web browser, so that the web browser sets transparency of the content background according to a transparency parameter input by a user, to set a color of the web page by setting a color generated after the content background is superimposed with the web page background, where a color of the web page background is different from a color of the content background.

As mentioned above, in a specific implementation process, the web page background may be set to white, and the content background may be set to black; or, the web page background is set to black, and the content background is set to white. Through the foregoing settings, the brightness of the web page can be set.

A person of ordinary skill in the art should understand that all or a part of the steps of the method may be implemented by a computer program instructing relevant hardware. The program may be stored in a computer readable storage medium such as a ROM, a RAM, or an optical disk.

In conclusion, the foregoing descriptions are merely exemplary embodiments of the present invention, but are not intended to limit the protection scope of the present invention. Any modifications, equivalent substitutions, and improvements made within the spirit and principles of the present invention shall fall within the protection scope of the present invention.

## Claims

1. A web page color setting method for setting a color of a web page, wherein the web page comprises a web page background and a content background, and a color of the web page background is different from a color of the content background, and the method comprises:
Receiving a transparency parameter input by a user; and
setting transparency of the content background according to the transparency parameter, to set the color of the web page by setting a color generated after the content background is superimposed with the web page background.

2. The method according to claim 1, wherein: the web page background is white, and the content background is black; or, the web page background is black, and the content background is white.

3. The method according to claim 2, wherein: the receiving a transparency parameter input by a user specifically comprises: receiving at least one brightness control parameter input by the user, and calculating the transparency parameter according to the at least one brightness control parameter.

4. A web page color setting method, comprising:
receiving a web page access request from a web browser; and
returning a web page requested to be accessed that comprises a web page background and a content background to the web browser, so that the web browser sets transparency of the content background according to a transparency parameter input by a user, to set a color of the web page by setting a color generated after the content background is superimposed with the web page background, wherein a color of the web page background is different from a color of the content background.

5. The method according to claim 4, wherein: the web page background is white, and the content background is black; or, the web page background is black, and the content background is white.

6. A web browser for setting a color of a web page, wherein the web page comprises a web page background and a content background, and a color of the web page background is different from a color of the content background, and the web browser comprises:
an input module, configured to receive a transparency parameter input by a user; and
a setting module, configured to set transparency of the content background according to the transparency parameter, to set the color of the web page by setting a color generated after the content background is superimposed with the web page background.

7. The web browser according to claim 6, wherein: the web page background is white, and the content background is black; or, the web page background is black, and the content background is white.

8. The web browser according to claim 7, wherein: when receiving the transparency parameter input by the user, the input module is specifically configured to receive at least one brightness control parameter input by the user, and calculate the transparency parameter according to the at least one brightness control parameter.

9. A web server, comprising:
a receiving module, configured to receive a web page access request from a web browser; and
a sending module, configured to return a web page requested to be accessed that comprises a web page background and a content background to the web browser, so that the web browser sets transparency of the content background according to a transparency parameter input by a user, to set a color of the web page by setting a color generated after the content background is superimposed with the web page background, wherein a color of the web page background is different from a color of the content background.

10. The web server according to claim 9, wherein: the web page background is white, and the content background is black; or, the web page background is black, and the content background is white.
